# EUROPEAN PATENT APPLICATION

(11) **EP 4 703 676 A1**
(43) Date of publication of application: **04.03.2026**
(21) Application number: 25197588.4
(22) Date of filing: 22.08.2025
(51) Int. Cl.: G01B 11/22, B60C 11/24, G01B 11/25

(54) **SYSTEM AND METHOD FOR TREAD DEPTH READER WITH MODULAR SENSOR UNITS**

(30) Priority: 30.08.2024 US 202463689150 P; 14.08.2025 US 202519299808
(71) Applicant: The Goodyear Tire & Rubber Company, Akron, OH 44316 (US)
(72) Inventor: GEORGES, Francois Pierre Charles, B-4970 Stavelot (BE); HYLLENDHO MASSOUEMA, Andy Emmanuel, L-7750 Colmar-Berg (LU); WESTPHAL, Guenter, L-7750 Colmar-Berg (LU); MARX, Corinna, L-7750 Colmar-Berg (LU); MADATHIKUZHY RENIJA, Roy, L-7750 Colmar-Berg (LU); KAMALI, Duran, D-44787 Bochum (DE); LENZE, Peter, Dorsten (DE); ABHIJITH, John, L-7750 Colmar-Berg (LU)
(74) Representative: Kutsch, Bernd

(57) **Abstract**

A system and method for estimating a tread depth of a tire (106) supporting a vehicle (100) is disclosed. The system comprises a tread depth reader housing (136) and a plurality of modular sensor units (127) disposed within the tread depth reader housing (136). Individual modular sensor units comprise a light source (145), a sensor (142) and modular sensor unit control circuitry (148). A first color of the light source (145) of a first modular sensor unit (127a) differs from a second color of the light source (145) of a second modular sensor unit (127b). The first modular sensor unit (127a) is directly adjacent to the second modular sensor unit (127b).

## Description

### BACKGROUND

Multiple tires support a vehicle, and transmit driving and braking forces from the vehicle to the road surface. It is beneficial to periodically measure the wear of the tires, as tire wear plays an important role in vehicle factors such as safety, reliability, and performance. Tread wear, which refers to the loss of material from the tread of the tire, directly affects such vehicle factors. As a result, it is desirable to monitor and/or measure the amount of tread wear experienced by a tire, which is indicated as the tire wear state. It is to be understood that for the purpose of convenience, the terms "tread wear" and "tire wear" may be used interchangeably.

One approach to the monitoring and/or measurement of tread wear has been to measure the tread depth of a tire mounted on a vehicle as the vehicle drives over a station and the tire passes over a sensor mounted in the station, which is known in the art as a drive over reader. The tread depth is measured when the tire is positioned over or adjacent the sensor, depending on the sensor that is employed.

The advantages of a drive over reader include static positioning of the tire tread over the reader contact surface during a short time interval, which enables the tread depth to be determined using contact or contactless methods. Examples of such methods include ultrasonics, radar reflectivity or other optical methods, such as laser triangulation or light section processes, which generate an image of the tire footprint or an image of the tire tread along a lateral line or section. The tread depth is determined from the image.

### SUMMARY OF THE INVENTION

The invention relates to a system in accordance with claim 1 and to a method in accordance with claim 10.

Dependent claims refer to preferred embodiments of the invention.

### BRIEF DESCRIPTION OF THE DRAWINGS

Many aspects of the present invention can be better understood with reference to the following drawings. The components in the drawings are not necessarily to scale, with emphasis instead being placed upon clearly illustrating the principles of the invention. Moreover, in the drawings, like reference numerals designate corresponding parts throughout the several views.
FIG. 1 is an example scenario of a vehicle driving over a drive over tread depth reader according to various embodiments of the present invention.
FIGS. 2A-2C are example perspective drawings of the tread depth reader of FIG. 1 according to various embodiments of the present invention.
FIGS. 3A-3B are example perspective drawings of a modular sensor unit of the tread depth reader of FIG. 1 according to various embodiments of the present invention.
FIG. 4 is a perspective drawing of modular sensor units connected to one another via a daisy chain configuration according to various embodiments of the present invention.
FIG. 5 an example point cloud image of a tire tread that can be formed based on the images captured by the sensors of each modular sensor unit of the tread depth reader according to various examples of the present invention.
FIG. 6 is a drawing of a network environment according to various embodiments of the present invention.
FIG. 7 is a flowchart illustrating one example of functionality implemented as portions of an application executed in a computing environment in the network environment of FIG. 6 according to various embodiments of the present invention.

### DEFINITIONS

"Axial" and "axially" mean lines or directions that are parallel to the axis of rotation of the tire.

"Circumferential" means lines or directions extending along the perimeter of the surface of the annular tread perpendicular to the axial direction.

"Equatorial plane (EP)" means the plane perpendicular to the tire's axis of rotation and passing through the center of its tread.

"Footprint" means the contact patch or area of contact created by the tire tread at its rated inflation pressure with a flat surface, such as the ground, as the tire rotates or rolls.

"Lateral" means an axial direction.

"Lateral edges" means a line tangent to the axially outermost tread contact patch or footprint as measured under normal load and tire inflation, the lines being parallel to the equatorial centerplane.

"Net contact area" means the total area of ground contacting tread elements between the lateral edges around the entire circumference of the tread of the tire divided by the gross area of the entire tread between the lateral edges.

"Outboard side" means the side of the tire farthest away from the vehicle when the tire is mounted on a wheel and the wheel is mounted on the vehicle.

"Radial" and "radially" mean lines or directions that are perpendicular to the axis of rotation of the tire.

"Rib" means a circumferentially extending strip of rubber on the tread which is defined by at least one circumferential groove and either a second such groove or a lateral edge, the strip being laterally undivided by full-depth grooves.

"Tread element" or "traction element" means a rib or a block element defined by a shape having adjacent grooves.

"Tread Arc Width" means the arc length of the tread of the tire as measured between the lateral edges of the tread.

### DETAILED DESCRIPTION OF PREFERRED EMBODIMENTS OF THE INVENTION

Disclosed are various systems and methods for measuring tread depth of a tire supported by a vehicle. In particular, the present invention relates to measuring tread depth using an improved tread depth reader having one or more modular sensor units that can be individually installed and uninstalled within the tread depth reader in a plug and play manner. Traditional drive over readers for tread depth measurement have challenges related to obsolescence of electronic hardware, deformation of the sensor body, laser misalignment, and water ingress corroding the sensor housing and damaging electrical components. According to various examples, the tread depth reader of the present invention minimizes load forces and vibrations that could be transmitted to the electronics and/or deform the sensor body of the modular sensor units, improves sealing capabilities of the sensor units to minimize water ingress, and eliminates the need to calibrate the lasers of the sensor units within the tread depth reader within one another.

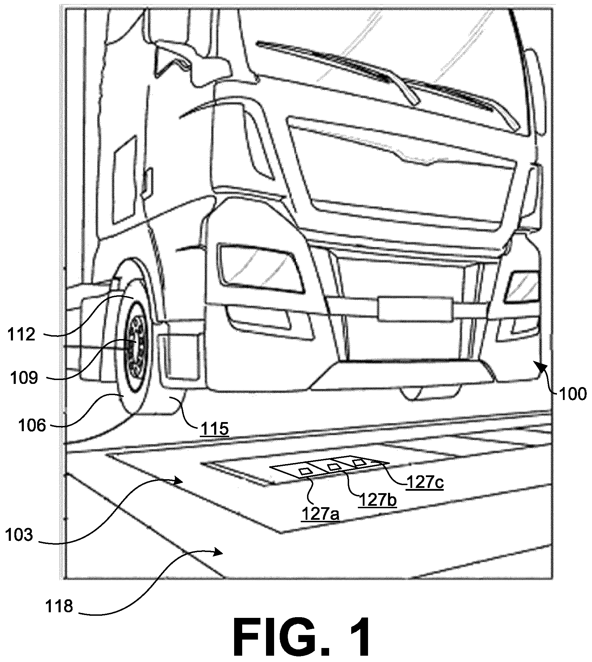

Turning now to FIG. 1, shown is an example scenario of a vehicle 100 driving over a drive-over tread depth reader 103 for tread depth measurements. According to various examples, the tread depth reader 103 obtains measurements that can be analyzed to estimate the tread depth of each tire 106 supporting a vehicle 100. It is to be understood that the vehicle 100 may be any vehicle type and is shown by way of example as a commercial vehicle.

The tires 106 are of conventional construction, and each tire 106 is mounted on a respective wheel 109. Each tire 106 includes a pair of sidewalls 112 that extend to a circumferential tread 115, which wears with age from road abrasion. As each tire 106 rolls over the ground 118, a footprint is created, which is the area of contact of the tread 115 with the ground.

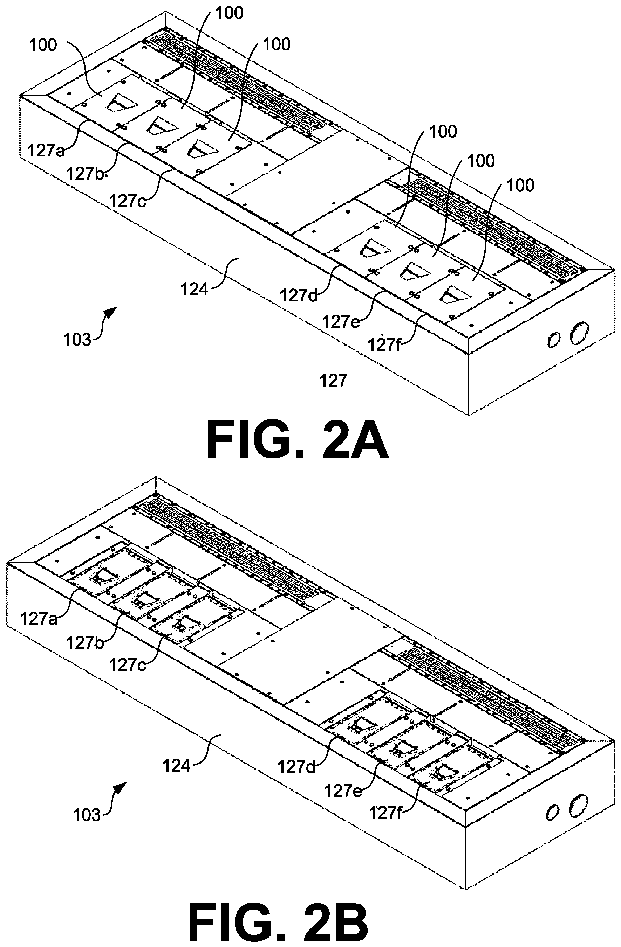

With additional reference to FIGS. 2A-3B, shown are example perspective drawings of the tread depth reader 103 of FIG. 1 according to various embodiments. The tread depth reader 103 can be mounted in or on the ground. The tread depth reader 103 includes a housing 124 and at least one modular sensor unit 127 (e.g., 127a, 127b, 127c, 127d, 127e, 127f, collectively referred to as modular sensor units 127 and generically as a modular sensor unit 127) mounted in the housing 124. In various examples, the housing 124 comprises a concrete housing. The driver of the vehicle 100 directs the vehicle over the tread depth reader 103, which causes each tire 106 to roll over the tread depth reader 103. When the tire 106 is positioned over or adjacent one or more modular sensor units 127, each modular sensor unit 127 can capture one or more images of the footprint or the tread 115 along a lateral line or section. The images can be generated by the sensors using techniques such as ultrasonics, radar reflectivity, laser triangulation or light section processes. The depth of the tread 115 of the tire 106 is determined from the image. Techniques for generating the image and measuring the depth of the tread 115 from the image are described by way of example in US 8,621,919, US 8,312,766 and US 7,942,048.

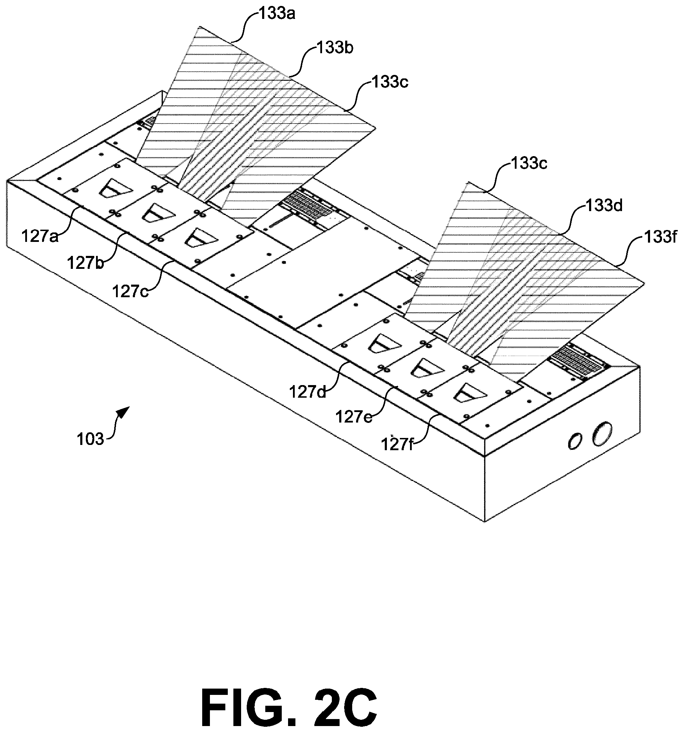

FIG. 2A illustrates a perspective view of a tread depth reader 103 comprising multiple modular sensor units 127 disposed within a tread depth reader housing 124 and covered with corresponding sensor plates 130 (*e.g*., 130a, 130b, 130c, 130d, 130e, 130f, collectively referred to as sensor plates 130 and generically as a sensor plate 130). FIG. 2B illustrates a perspective view of a tread depth reader 103 comprising the multiple modular sensor units 127 disposed within a tread depth reader housing 124 without a corresponding sensor plate 130. FIG. 2C illustrates a perspective view a tread depth reader 103 illustrating the light projections 133 (*e.g*., 133a, 133b, 133c, 133d, 133e, 133f, collectively referred to as light projections 133 and generically as a light projection 133) being emitted from the light sources of the modular sensor units 127 according to various examples. It should be noted that although FIGS. 2A-2C illustrate six modular sensor units 127 in pairs of three, the tread depth reader 103 is not limited to this configuration. In various examples, the number of modular sensor units 127 disposed within a tread depth reader housing 124 can be modified to include more or less modular sensor units 127 than shown in FIGS. 2A-2C. In some examples, the number of modular sensor units 127s can be based at least in part on the type of tires 106 being analyzed (*e.g*., commercial, passenger), the number of tires 106 on each axle, a number of images to obtain, and/or other factors.

Each sensor plate 130 is configured to cover a corresponding modular sensor unit 127. For example, sensor plate 130a is placed over sensor unit 127a. In various examples, the sensor plates 130 are mounted to and/or within the housing 124 to cover each corresponding modular sensor unit 127a to allow any load or vibrations caused by the vehicle 100 driving over the tread depth reader 103 to be transmitted to the housing 124 and not the corresponding modular sensor unit 127 and/or the electronics within the corresponding modular sensor unit 127. In various examples, the sensor plates 130 are manufactured with stainless steel to provide additional strength and protection for the modular sensor units 127 due to the load and vibrations caused by a vehicle 100 driving over the tread depth reader 103.

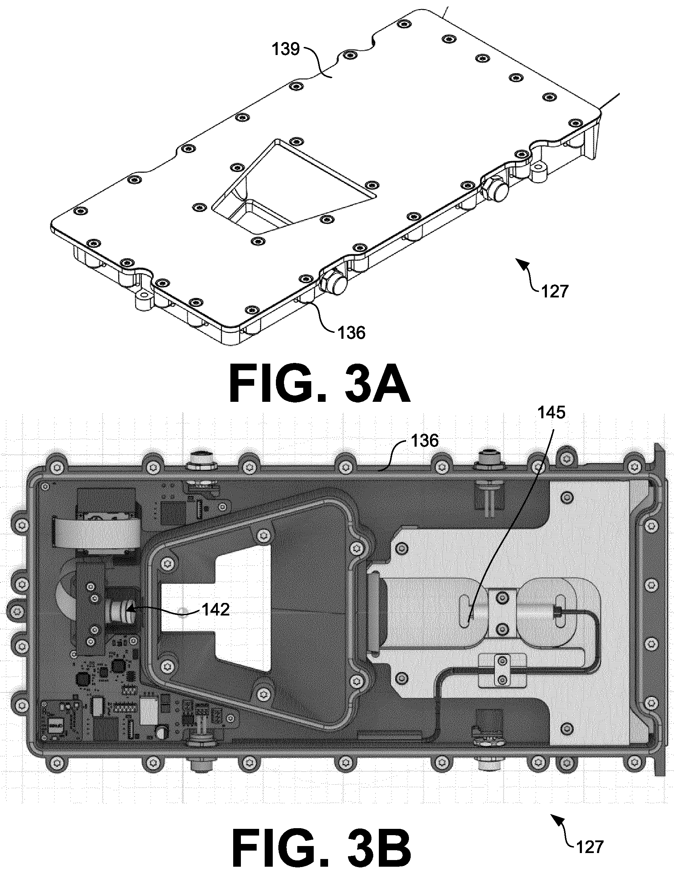

FIGS. 3A and 3B provide additional reference to the modular sensor units 127 installed within the tread depth reader 103. In various examples, a modular sensor unit 127 comprises a sensor housing 136, a cover plate 139, a sensor 142, a light source 145, modular sensor unit circuitry 148, and/or other components as can be appreciated. In various examples, the sensor housing 136 comprises an aluminum body and is configured to contain the sensor 142, light source 145, and modular sensor unit circuitry 148 required to obtain images of tires 106 of a vehicle 100 being driven over the drive over reader 103. The cover plate 139 covers the top of the sensor housing 136 to protect the sensor 142, the light source 145, the modular unit circuity and/or other components including within the sensor housing 136.

The sensor 142 comprises a camera for obtaining images of the tire 106 based at least in part on light projections 133 emitted from the corresponding light source 145. In various examples, the camera can comprise a high-speed monochrome camera. In various examples, for each modular sensor unit 127, a ray fan (*e.g*., light projection 133) is produced from the light source 145 which impinges transversely to the moving direction of the tire 106 driving over the tread depth reader 103. The sensor 142 obtains the data (*e.g*., images) used to obtain the tread depth measurements for the given tire 106.

In various examples, a light source 145 comprises a laser. According to various embodiments, and as illustrated in FIG. 2C, the first light projection 133a of a first light source 145a of a first modular sensor unit 127a differs in color from a second light projection of a second light source 145b of a second modular sensor unit 127b when the first modular sensor unit 127a and the second modular sensor unit 127b are installed directly adjacent to one another. In this example, the first sensor 142a of the first modular sensor unit 127a is configured to capture only images associated with the color emitted from the first light source 145a and the second sensor 142b of the second modular sensor unit 127b is configured to capture only images associated with the color emitted from the second light source 145b. Accordingly, neighboring light sources 145 do not interfere with each other and each sensor 142 can capture as many images as possible without interference from a neighboring light source 145. In various examples, the sensor 142 and the light source 145 for a given modular sensor units 127 only require calibration with one another and calibration among neighboring modular sensor units 127 is not necessary since the sensor 142 only obtains data associated with the corresponding light source 145 of the given modular sensor unit 127.

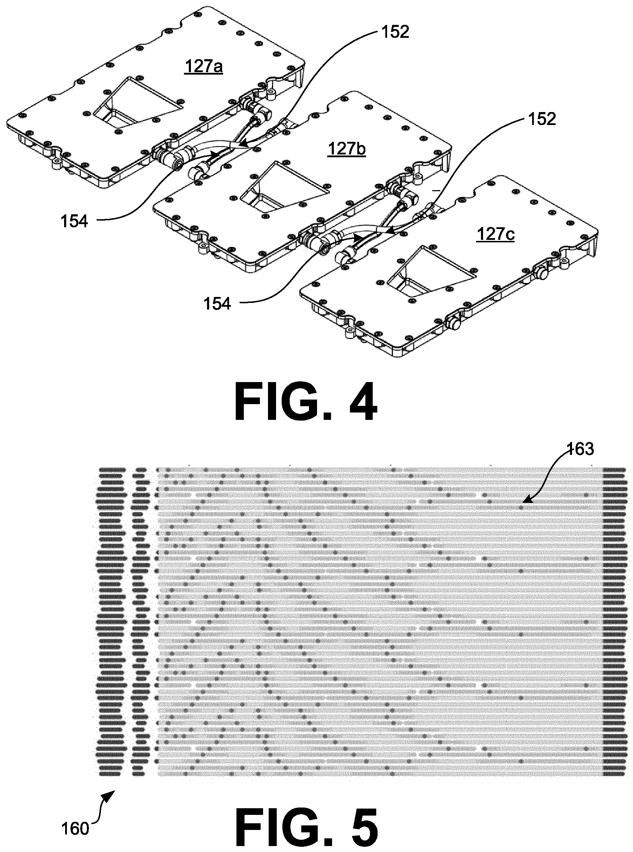

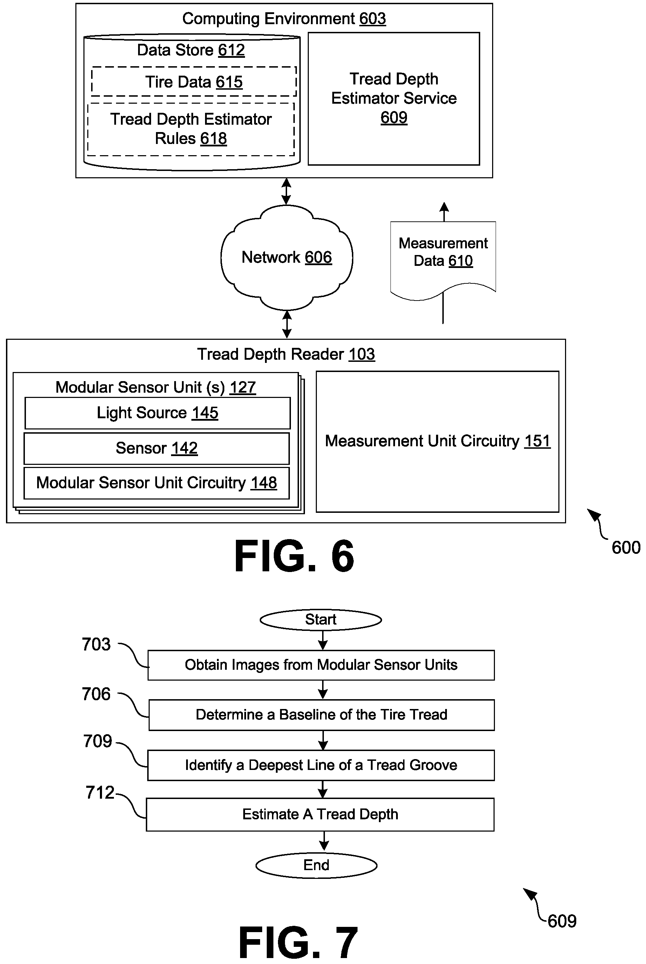

Turning now to FIG. 4, shown is a perspective drawing of modular sensor units 127 connected to one another via a daisy chain configuration. For example, as illustrated in FIG. 4, each modular sensor unit 127 can comprise a power outlet connector, a power inlet connector, a data outlet connector, and a data inlet connector, each of which can be connected via a corresponding power cable 152 or data cable 154. The last modular sensor unit 127 of a daisy chained connection can then be connected to the measurement unit circuitry 157 (FIG. 6) of the tread depth reader 103. The daisy chain configuration between modular sensor units 127 allows for ease with installing and uninstalling a given modular sensor unit 127 within the tread depth reader 103.

Referring next to FIG. 5, shown is an example point cloud image 160 of a tire tread 115 that can be formed based on the images captured by the sensors 142 of each modular sensor unit 127 of the tread depth reader 103. FIG. 5 illustrates that the multiple images that are obtained from the sensors 142 allow the point cloud image 160 to include the lateral tread lines 163 that can be used to accurately measure the tread depth of the given tire 106.

With reference to FIG. 6, shown is a network environment 600 according to various embodiments. The network environment 600 can include a computing environment 603 and a tread depth reader 103, which can be in data communication with each other via a network 606.

The network 606 can include wide area networks (WANs), local area networks (LANs), personal area networks (PANs), or a combination thereof. These networks can include wired or wireless components or a combination thereof. Wired networks can include Ethernet networks, cable networks, fiber optic networks, and telephone networks such as dial-up, digital subscriber line (DSL), and integrated services digital network (ISDN) networks. Wireless networks can include cellular networks, satellite networks, Institute of Electrical and Electronic Engineers (IEEE) 802.11 wireless networks (*i.e.*, WI-FI^{®}), BLUETOOTH^{®} networks, microwave transmission networks, as well as other networks relying on radio broadcasts. The network 606 can also include a combination of two or more networks 606. Examples of networks 606 can include the Internet, intranets, extranets, virtual private networks (VPNs), and similar networks.

The computing environment 603 can include one or more computing devices that include a processor, a memory, and/or a network interface. For example, the computing devices can be configured to perform computations on behalf of other computing devices or applications. As another example, such computing devices can host and/or provide content to other computing devices in response to requests for content.

Moreover, the computing environment 603 can employ a plurality of computing devices that can be arranged in one or more server banks or computer banks or other arrangements. Such computing devices can be located in a single installation or can be distributed among many different geographical locations. For example, the computing environment 603 can include a plurality of computing devices that together can include a hosted computing resource, a grid computing resource or any other distributed computing arrangement. In some cases, the computing environment 603 can correspond to an elastic computing resource where the allotted capacity of processing, network, storage, or other computing-related resources can vary over time.

Various applications or other functionality can be executed in the computing environment 603. The components executed on the computing environment 603 include a tread depth estimator service 609, and other applications, services, processes, systems, engines, or functionality not discussed in detail herein.

The tread depth estimator service 609 can be executed to measure the tread depth of a tire 106 based at least in part on measurement data 610 received from the tread depth reader 103. In various examples, the measurement data 610 corresponds to the images captured by each of the sensors 142 of the modular sensor units 127 in the tread depth reader 103. In various examples, the tread depth estimator service 609 can obtain the measurement data 610 and generates a point cloud image 160 of the footprint or tread of the tire 106. In various examples, the tread depth estimator service 609 can determine a tread depth baseline from the point cloud image 160 as well as a tread depth and can estimate a tread depth using a comparison of the baseline and the tread depth.

Also, various data is stored in a data store 612 that is accessible to the tread depth estimator service 609. The data store 612 may be representative of a plurality of data stores 612 as can be appreciated. The data stored in the data store 612 for example, is associated with the operation of the various applications and/or functional entities associated tread depth reader 103 and/or tread depth estimator service 609. For example, the data store 612 can include tire data 615, tread depth estimator rules 618, and/or other information.

The tire data 615 can include information for each specific tire 106. For example, the tire data 615 may include a tire identifier, manufacturing information for the tire 106 (*e.g*., manufacture name, tire model, *etc*.), tire size information (*e.g*., rim size, width, and outer diameter, *etc*.), manufacturing location, manufacturing date, a treadcap code that includes or correlates to a compound identification, a mold code that includes or correlates to a tread structure identification, and/or other information. The vehicle tire data 615 may also include a service history or other information to identify specific features and parameters of each tire 106.

The tread depth estimation rules 618 include rules, models, and/or configuration data for the various algorithms or approaches employed by tread depth estimator service 609, and/or other application or device. In some examples, the tread depth estimation rules 618 can include the various models, formulas, equations, and/or algorithms for generating the point cloud image 160, analyzing the measurement data 610, estimating a tread depth, and/or other factors.

It should be noted that although the computing environment 603 and the tread depth reader 103 are illustrated in FIG. 6 as being separate and distinct from one another, in some examples, the tread depth reader 103 and/or the measurement unit circuitry 151 of the tread depth reader 103 includes the functionality and components of the computing environment 603. Accordingly, the functionality and components described with respect to the computing environment 603 can be included as part of the tread depth reader 103.

Referring next to FIG. 7, shown is a flowchart that provides one example of the operation of a portion of the tread depth estimator service 609. The flowchart of FIG. 7 provides merely an example of the many different types of functional arrangements that can be employed to implement the operation of the depicted portion of the tread depth estimator service 609. As an alternative, the flowchart of FIG. 7 can be viewed as depicting an example of elements of a method implemented within the networked environment 600.

Beginning with block 703, the tread depth estimator service 609 obtains images from the modular sensor units 137 of the tread depth reader 103. The images can be included in measurement data 610 and can correspond to the images of the footprint and/or tread 115 of the tire 106 supporting a vehicle 100 driving over the tread depth reader 103. In various examples, each sensor 142 within a modular sensor unit 127 captures multiple images of the tread of the tire 106 in response to a corresponding ray fan (*e.g*., light projection 133) associated with the light source 145 of the given modular sensor unit 127. The tread of the tire 106 can be optically sensed by the sensor 142 transversely to the rolling direction of the tire 106. Each sensor 142 may be configured to obtain images of the tire tread 115 that correspond to one or more portions of the tire tread 115. In some examples, sensor 142 can obtain overlapping images, but since the light source 145 of neighboring modular sensor units 127 emits differing colors, the data obtained by a given sensor 142 will not be interfered with by a neighboring light source 145.

At block 706, the tread depth estimator service 609 determines a baseline of the tire tread 115. For example, the tread depth estimator service 609 can analyze the images obtained from the modular sensor units 127 and generate a point cloud 160 representing the tire tread 115. The baseline can be estimated based at least in part on an analysis of the point cloud image 160. At block 709, the tread depth estimator service 609 identifies the deepest line of a tread groove. In various examples, the deepest line can be identified based at least in part on an analysis of the point cloud image 160.

At block 709, the tread depth estimator service 609 estimates a tread depth of the tire 106. For example, the tread depth can be estimated by comparing the baseline with the deepest line of the tread groove. Thereafter, this portion of the process proceeds to completion.

A number of software components previously discussed are stored in the memory of the respective computing devices and are executable by the processor of the respective computing devices. In this respect, the term "executable" means a program file that is in a form that can ultimately be run by the processor. The memory includes both volatile and nonvolatile memory and data storage components.

Although the applications and systems described herein can be embodied in software or code executed by general purpose hardware as discussed above, as an alternative the same can also be embodied in dedicated hardware or a combination of software/general purpose hardware and dedicated hardware. If embodied in dedicated hardware, each can be implemented as a circuit or state machine that employs any one of or a combination of a number of technologies. These technologies can include, but are not limited to, discrete logic circuits having logic gates for implementing various logic functions upon an application of one or more data signals, application specific integrated circuits (ASICs) having appropriate logic gates, field-programmable gate arrays (FPGAs), or other components, *etc.* Such technologies are generally well known by those skilled in the art and, consequently, are not described in detail herein.

The flowchart shows the functionality and operation of an implementation of portions of the various embodiments of the present invention. If embodied in software, each block can represent a module, segment, or portion of code that includes program instructions to implement the specified logical function(s). The program instructions can be embodied in the form of source code that includes human-readable statements written in a programming language or machine code that includes numerical instructions recognizable by a suitable execution system such as a processor in a computer system. The machine code can be converted from the source code through various processes. For example, the machine code can be generated from the source code with a compiler prior to execution of the corresponding application. As another example, the machine code can be generated from the source code concurrently with execution with an interpreter. Other approaches can also be used. If embodied in hardware, each block can represent a circuit or a number of interconnected circuits to implement the specified logical function or functions.

Although the flowchart shows a specific order of execution, it is understood that the order of execution can differ from that which is depicted. For example, the order of execution of two or more blocks can be scrambled relative to the order shown. Also, two or more blocks shown in succession can be executed concurrently or with partial concurrence. Further, in some embodiments, one or more of the blocks shown in the flowchart shows can be skipped or omitted. In addition, any number of counters, state variables, warning semaphores, or messages might be added to the logical flow described herein, for purposes of enhanced utility, accounting, performance measurement, or providing troubleshooting aids, *etc.* It is understood that all such variations are within the scope of the present invention.

Also, any logic or application described herein that includes software or code can be embodied in any non-transitory computer-readable medium for use by or in connection with an instruction execution system such as a processor in a computer system or other system. In this sense, the logic can include statements including instructions and declarations that can be fetched from the computer-readable medium and executed by the instruction execution system. In the context of the present invention, a "computer-readable medium" can be any medium that can contain, store, or maintain the logic or application described herein for use by or in connection with the instruction execution system. Moreover, a collection of distributed computer-readable media located across a plurality of computing devices (*e.g.*, storage area networks or distributed or clustered filesystems or databases) may also be collectively considered as a single non-transitory computer-readable medium.

The computer-readable medium can include any one of many physical media such as magnetic, optical, or semiconductor media. More specific examples of a suitable computer-readable medium would include, but are not limited to, magnetic tapes, magnetic floppy diskettes, magnetic hard drives, memory cards, solid-state drives, USB flash drives, or optical discs. Also, the computer-readable medium can be a random-access memory (RAM) including static random-access memory (SRAM) and dynamic random-access memory (DRAM), or magnetic random-access memory (MRAM). In addition, the computer-readable medium can be a read-only memory (ROM), a programmable read-only memory (PROM), an erasable programmable read-only memory (EPROM), an electrically erasable programmable read-only memory (EEPROM), or other type of memory device.

Further, any logic or application described herein can be implemented and structured in a variety of ways. For example, one or more applications described can be implemented as modules or components of a single application. Further, one or more applications described herein can be executed in shared or separate computing devices or a combination thereof. For example, a plurality of the applications described herein can execute in the same computing device, or in multiple computing devices in the same computing environment 603.

## Claims

1. A system for estimating a tread depth of a tire (106) supporting a vehicle (100), the system comprising:
a tread depth reader housing (136); and
a plurality of modular sensor units (127) disposed within the tread depth reader housing (136), individual modular sensor units comprising:
a light source (145);
a sensor (142); and
modular sensor unit control circuitry (148),
wherein a first color of the light source (145) of a first modular sensor unit (127a) differs from a second color of the light source (145) of a second modular sensor unit (127b), the first modular sensor unit (127a) being directly adjacent to the second modular sensor unit (127b).

2. The system of claim 1, further comprising a computing device comprising a processor, a memory and at least one application stored in the memory, wherein, when executed by the processor, the at least one application causes the computing device to at least: obtain a plurality of images from the plurality of modular sensor units (127) and estimate the tread depth of the tire (106) supporting the vehicle (100) based at least in part on an analysis of the plurality of images.

3. The system of claim 2, wherein the plurality of images corresponds to images of the tread (115) along a lateral line (163) or section of the tire (106); and/or wherein the plurality of images include images of a footprint of the tire (106).

4. The system of at least one of the previous claims, wherein the plurality of modular sensor units (127) are communicatively coupled to one another via a daisy chain configuration.

5. The system of at least one of the previous claims, wherein the individual modular sensor units (127) each comprise a sensor housing (136) and a first cover plate (139) disposed over the sensor housing (136).

6. The system of claim 5, further comprising a plurality of second cover plates, individual second cover plates being placed over a respective modular sensor unit (127) of the plurality of modular sensor units disposed within the tread depth reader housing (136), and, preferably, wherein the plurality of second cover plates are made of or comprise steel or stainless steel.

7. The system of at least one of the previous claims, further comprising measurement control circuitry (151), the plurality of modular sensor units (127) being communicatively coupled to the measurement control circuitry (151) via the modular sensor unit circuitry (148).

8. The system of at least one of the previous claims, wherein the sensor (142) of the first modular sensor unit (127a) is configured to capture images corresponding to the first color and the sensor (142) of the second modular sensor unit (127b) is configured to capture images corresponding to the second color.

9. The system of at least one of the previous claims, wherein the individual modular sensor units (127) are detachably attached to the tread depth reader housing.

10. A method for estimating a tread depth of a tire (106) supporting a vehicle (100), the method comprising:
obtaining a plurality of images of the tire (106) from a plurality of modular sensor units (127) of a tread depth reader (103) in response to the vehicle (100) driving over the tread depth reader (103), a first modular sensor unit (127a) of the plurality of modular sensor units (127) comprising a first light source (145) and a first sensor (142), a second modular sensor unit (127b) of the plurality of modular sensor units (127) comprising a second light source (145) and a second sensor (142), a first color of the first light source differing from a second color of the second light source; and
estimating the tread depth of the tire (106) based at least in part on an analysis of the plurality of images.

11. The method of claim 10, further comprising:
determining a baseline of the tire tread based at least in part on the analysis of the plurality of image; and
identifying a deepest line of a groove of the tire (106) based at least in part on the analysis of the plurality of images, the tread depth being estimated based at least in part on the baseline and the deepest line of the groove.

12. The method of claim 10 or 11, wherein a first portion of the plurality of images being captured by the first sensor (142) and a second portion of the plurality of images being captured by the second sensor (142), the first sensor being configured to capture images associated with the first color and the second sensor being configured to capture images associated with the second color.

13. The method of at least one of the claims 10 to 12, wherein the plurality of images correspond to images of the tread (115) along a lateral line (163) or section of the tire (106).

14. The method of at least one of the claims 10 to 13, wherein the plurality of images include images of a footprint of the tire (106).

15. The method of at least one of the claims 10 to 12, wherein the plurality of modular sensor units (127) are communicatively coupled to one another via a daisy chain configuration.
